# EUROPEAN PATENT SPECIFICATION

(11) **EP 1 849 841 B1**
(45) Date of publication and mention of the grant of the patent: **17.06.2009**
(21) Application number: 07106839.9
(22) Date of filing: 24.04.2007
(51) Int. Cl.: C09D 11/00

(54) **Phase Change Ink Additives**
Zusatzstoffe für Phasenwechseltinte
Additifs de changement de phase pour encre

(30) Priority: 28.04.2006 US 380788
(43) Date of publication of application: 31.10.2007
(73) Proprietor: Xerox Corporation, Rochester, New York 14644 (US)
(72) Inventor: Banning, Jeffrey H., Hillsboro, OR 97124 (US); Wedler, Wolfgang G., Tualatin, OR 97062 (US)
(74) Representative: Grünecker, Kinkeldey, Stockmair & Schwanhäusser Anwaltssozietät

(56) References cited:
- US-A- 6 057 399
- US-A- 6 117 223
- US-A1- 2006 016 369
- US-B1- 6 187 083

## Description

Described herein are inks such as solid phase change or hot melt inks that have a consistent electrical conductivity and may be used as an input signal for an ink reservoir level sensing in ink jet devices.

The phase change ink compositions illustrated herein in embodiments are solid at room temperature, for example from 20°C to 27°C, and are suitable for ink jet printing processes, particularly piezoelectric and acoustic ink jet printing processes.

The phase change inks disclosed herein include a conductivity enhancing agent with a benefit that the agent imparts a consistent conductivity to the ink without damaging any printer parts, for example, printer parts found in the print heads or the reservoir of an ink jet device.

Ink jetting devices are well known in the art. As described in U.S. Patent No. 6,547,380, ink jet printing systems are generally of two types: continuous stream and drop-on-demand. In continuous stream ink jet systems, ink is emitted in a continuous stream under pressure through at least one orifice or nozzle. The stream is perturbed, causing it to break up into droplets at a fixed distance from the orifice. At the break-up point, the droplets are charged in accordance with digital data signals and passed through an electrostatic field that adjusts the trajectory of each droplet in order to direct it to a gutter for recirculation or a specific location on a recording medium. In drop-on-demand systems, a droplet is expelled from an orifice directly to a position on a recording medium in accordance with digital data signals. A droplet is not formed or expelled unless it is to be placed on the recording medium. There are generally three types of drop-on-demand ink jet systems. One type of drop-on-demand system is a piezoelectric device that has as its major components an ink filled channel or passageway having a nozzle on one end and a piezoelectric transducer near the other end to produce pressure pulses. Another type of drop-on-demand system is known as acoustic ink printing. As is known, an acoustic beam exerts a radiation pressure against objects upon which it impinges. Thus, when an acoustic beam impinges on a free surface (i.e., liquid/air interface) of a pool of liquid from beneath, the radiation pressure which it exerts against the surface of the pool may reach a sufficiently high level to release individual droplets of liquid from the pool, despite the restraining force of surface tension. Focusing the beam on or near the surface of the pool intensifies the radiation pressure it exerts for a given amount of input power. Still another type of drop-on-demand system is known as thermal ink jet, or bubble jet, and produces high velocity droplets. The major components of this type of drop-on-demand system are an ink filled channel having a nozzle on one end and a heat generating resistor near the nozzle. Printing signals representing digital information originate an electric current pulse in a resistive layer within each ink passageway near the orifice or nozzle, causing the ink vehicle (usually water) in the immediate vicinity to vaporize almost instantaneously and create a bubble. The ink at the orifice is forced out as a propelled droplet as the bubble expands.

In a typical design of a piezoelectric ink jet device, the image is applied by jetting appropriately colored inks during four to eighteen rotations (incremental movements) of a substrate such as an image receiving member or intermediate transfer member with respect to the ink jetting head, i.e., there is a small translation of the printhead with respect to the substrate in between each rotation. This approach simplifies the printhead design, and the small movements ensure good droplet registration. At the jet operating temperature, droplets of liquid ink are ejected from the printing device. When the ink droplets contact the surface of the recording substrate, either directly or via an intermediate heated transfer belt or drum, they quickly solidify to form a predetermined pattern of solidified ink drops. Phase change ink jet processes are well known and are described, for example, in U.S. Patents Nos. 4,601,777, 4,251,824, 4,410,899, 4,412,224 and 4,532,530.

Ink jet printing processes may employ inks that are solid at room temperature and liquid at elevated temperatures. Such inks may be referred to as hot melt inks or phase change inks. For example, U.S. Patent No. 4,490,731 discloses an apparatus for dispensing solid ink for printing on a substrate such as paper. In thermal ink jet printing processes employing hot melt inks, the solid ink is melted by the heater in the printing apparatus and utilized (i.e., jetted) as a liquid in a manner similar to that of conventional thermal ink jet printing. Upon contact with the printing substrate, the molten ink solidifies rapidly, enabling the colorant to substantially remain on the surface of the substrate instead of being carried into the substrate (for example, paper) by capillary action, thereby enabling higher print density than is generally obtained with liquid inks. Advantages of a phase change ink in ink jet printing are thus elimination of potential spillage of the ink during handling, a wide range of print density and quality, minimal paper cockle or distortion, and enablement of indefinite periods of nonprinting without the danger of nozzle clogging, even without capping the nozzles.

In ink jetting devices, the device may measure electrical conductivity of the phase change inks as an input signal representative of the ink reservoir level in the device. For example, during operation, the device may perform a constant comparison between measured ink conductivities and a specified value representative of an ink level. As a result of the comparison, liquifaction of additional ink amounts for re-supply to the reservoirs during the printing process is either started or stopped. Effectively, this mechanism may prevent overflow of ink reservoirs in the printers, which would otherwise damage sensitive printer parts.

US-A-6057399 discloses a phase change ink, which comprises an ink vehicle, a colorant, and a conductivity enhancing agent. The ink vehicle may be an amide-based material, preferably a fatty amide compound, an isocyanate-based material, or a combination thereof. The conductivity enhancing agent may be a quaternary ammonium salt such as an alkyltrimethyl, dialkyldimethyl, trialkylmethyl, tetraalkyl, benzylalkyl, ethoxylated or propoxylated salt.

US-A-2006/016369 discloses a phase change ink composition comprising an ink vehicle and a specific colorant. The ink vehicle may be a fatty amide compound, an isocyanate-derived resin or wax, or a mixture thereof.

Phase change inks containing an ink vehicle, a colorant, and an organic salt are also known from US-B-6187083 and US-A-6117223.

The present invention provides a phase change ink having an ink vehicle, at least one colorant, and a conductivity enhancing agent, wherein the conductivity enhancing agent is an organic salt being tri-hexadecyl ammonium-trifluoro acetate, tri-hexadecyl ammonium-methyl sulfonate, tri-hexadecyl ammonium-trifluoromethyl sulfonate, or a mixture thereof.

The present invention further provides an ink jet system, comprising:
at least one phase change ink having an ink vehicle and a conductivity enhancing agent, wherein the conductivity enhancing agent is an organic salt being tri-hexadecyl ammonium-trifluoro acetate, tri-hexadecyl ammonium-methyl sulfonate, tri-hexadecyl ammonium-trifluoromethyl sulfonate, or a mixture thereof, and
an ink jet device including an ink jet head consisting of one or more channels for the at least one phase change ink, and a supply path that supplies the at least one phase change ink to the one or more channels of the ink jet head from one or more reservoirs containing the at least one phase change ink, and wherein the one or more reservoirs includes a sensor to measure conductivity of the at least one phase change ink therein.

Moreover, the present invention provides a method of forming an image, comprising:
heating a phase change ink in a reservoir, wherein the ink comprises an ink vehicle, at least one colorant and a conductivity enhancing agent, wherein the conductivity enhancing agent is an organic salt being tri-hexadecyl ammonium-trifluoro acetate, tri-hexadecyl ammonium-methyl sulfonate, tri-hexadecyl ammonium-trifluoromethyl sulfonate, or a mixture thereof, and
jetting the heated ink onto an image receiving substrate, wherein the image receiving substrate is maintained at a second temperature at which the ink forms a gel,
wherein a reservoir has a sensor to measure the conductivity of the ink in the reservoir,
wherein the measured conductivity of the ink is compared against a value indicative of ink level in the reservoir, and
wherein addition of the ink into the reservoir is continued or stopped in response to the comparison of the measured conductivity to the value indicative of the ink level.

Preferred embodiments of the present invention are set forth in the sub-claims.

The phase change inks including an electrical conductivity enhancing agent include an ink vehicle that is solid at temperatures of 20°C to 27°C, for example room temperature, and specifically are solid at temperatures below 40°C. However, the inks change phase upon heating, and are in a molten state at jetting temperatures. Thus, the inks have a viscosity of from 1 to 20 mPa·s (centipoise (cP)), such as from 5 to 15 mPa·s (cP) or from 8 to 12 mPa·s (cP), at an elevated temperature suitable for ink jet printing, such as temperatures of from 50°C to 150°C.

In this regard, the inks herein may be low energy inks. Low energy inks are solid at a temperature below 40°C and have a viscosity of from 5 to 15 mPa·s (cP) at a jetting temperature of from 50°C to 150°C, such as from 70°C to 120°C or from 80°C to 120°C. The inks jet at lower temperatures as above, and thus require lower amounts of energy for jetting.

Any suitable ink vehicle can be employed. Suitable vehicles can include paraffins, microcrystalline waxes, polyethylene waxes, ester waxes, fatty acids and other waxy materials, fatty amide containing materials, sulfonamide materials, resinous materials made from different natural sources (tall oil rosins and rosin esters, for example), and many synthetic resins, oligomers, polymers, and copolymers such as further discussed below, and mixtures thereof.

Examples of suitable specific ink vehicles include, for example, ethylene/propylene copolymers, such as those available from Petrolite and of the general formula 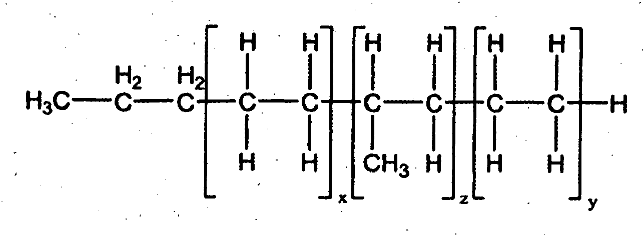 wherein z represents an integer from 0 to 30, for example from 0 to 20 or from 0 to 10, y represents an integer from 0 to 30, for example from 0 to 20 or from 0 to 10 and x is equal to about 21-y. The distribution of the side branches may be random along the carbon chain. The copolymers may have, for example, a melting point of from 70°C to 150°C, such as from 80°C to 130°C or from 90°C to 120°C and a molecular weight range of from 500 to 4,000. Commercial examples of such copolymers include, for example, Petrolite CP-7 (Mn = 650), Petrolite CP-11 (Mn =1,100, Petrolite CP-12 (Mn = 1,200) and the like.

Urethane, urea, amide and imide derivatives of oxidized synthetic or petroleum waxes, such as those available from Petrolite and of the general formulas 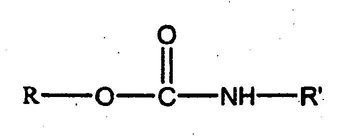 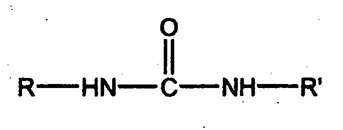 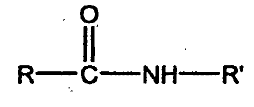 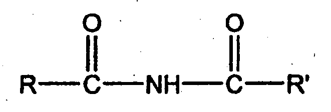 wherein R is an alkyl group of the formula CH₃(CH₂)ₙ, n is an integer of from 5 to 400, for example from 10 to 300 or from 20 to 200 and R' is a tolyl group, may also be used as the ink vehicle. In embodiments, the urethane, urea, amide and imide derivatives may be linear, branched, cyclic and any combination thereof. These materials may have a melting point of from 60°C to 120°C, such as from 70°C to 100°C or from 70°C to 90°C. Commercial examples of such materials include, for example, PETROLITE CA-11 (Mn = 790, Mw/Mn = 2.2), PETROLITE WB-5 (Mn = 650, Mw/Mn = 1.7), PETROLITE WB-17 (Mn = 730, Mw/Mn = 1.8), and the like. Suitable examples also include urethane, urea, amide and imide derivatives disclosed in U.S. Patents Nos. 6,620,228, 6,380,423, 6,464,766 and 6,309,453.

Another type of ink vehicle may be n-paraffinic, branched paraffinic, and/or aromatic hydrocarbons, typically with from 5 to 100, such as from 20 to 180 or from 30 to 60 carbon atoms, generally prepared by the refinement of naturally occurring hydrocarbons, such as BE SQUARE 185 and BE SQUARE 195, with molecular weights (Mn) of from 100 to 5,000, such as from 250 to 1,000 or from 500 to 800, for example such as available from Petrolite.

Highly branched hydrocarbons, typically prepared by olefin polymerization, such as the VYBAR materials available from Petrolite, including VYBAR 253 (Mn = 520), VYBAR 5013 (Mn = 420), and the like, may also be used. In addition, the ink vehicle may be an ethoxylated alcohol, such as available from Petrolite and of the general formula 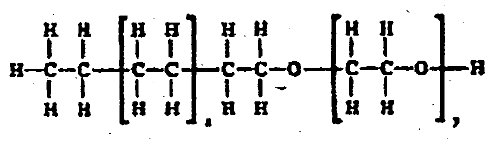 wherein x is an integer of from 1 to 50, such as from 5 to 40 or from 11 to 24 and y is an integer of from 1 to 70, such as from 1 to 50 or from 1 to 40. The materials may have a melting point of from 60°C to 150°C, such as from 70°C to 120°C or from 80°C to 110°C and a molecular weight (Mn) range of from 100 to 5,000, such as from 500 to 3,000 or from 500 to 2,500. Commercial examples include UNITHOX 420 (Mn = 560), UNITHOX 450 (Mn = 900), UNITHOX 480 (Mn =2,250), UNITHOX 520 (Mn = 700), UNITHOX 550 (Mn = 1,100), UNITHOX 720 (Mn = 875), UNITHOX 750 (Mn = 1,400), and the like.

As an additional example, mention may be made of fatty amides, such as monoamides, tetra-amides, mixtures thereof, and the like, for example such as described in U.S. Patent No. 6,858,070. Suitable monoamides may have a melting point of at least 50°C, for example from 50°C to 150°C, although the melting point can be below this temperature. Specific examples of suitable monoamides include, for example, primary monoamides and secondary monoamides. Stearamide, such as KEMAMIDE S available from Witco Chemical Company and CRODAMIDE S available from Croda, behenamide/arachidamide, such as KEMAMIDE B available from Witco and CRODAMIDE BR available from Croda, oleamide, such as KEMAMIDE U available from Witco and CRODAMIDE OR available from Croda, technical grade oleamide, such as KEMAMIDE O available from Witco, CRODAMIDE O available from Croda, and UNISLIP 1753 available from Uniqema, and erucamide such as KEMAMIDE E available from Witco and CRODAMIDE ER available from Croda, are some examples of suitable primary amides. Behenyl behenamide, such as KEMAMIDE EX666 available from Witco, stearyl stearamide, such as KEMAMIDE S-180 and KEMAMIDE EX-672 available from Witco, stearyl erucamide, such as KEMAMIDE E-180 available from Witco and CRODAMIDE 212 available from Croda, erucyl erucamide, such as KEMAMIDE E-22l available from Witco, oleyl palmitamide, such as KEMAMIDE P-181 available from Witco and CRODAMIDE 203 available from Croda, and erucyl stearamide, such as KEMAMIDE S-221 available from Witco, are some examples of suitable secondary amides. Additional suitable amide materials include KEMAMIDE W40 (N,N'-ethylenebisstearamide), KEMAMIDE P181 (oleyl palmitamide), KEMAMIDE W45 (N,N'-thylenebisstearamide), and KEMAMIDE W20 (N,N'-ethylenebisoleamide).

High molecular weight linear alcohols, such as those available from Petrolite and of the general formula 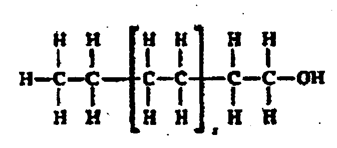 wherein x is an integer of from 1 to 50, such as from 5 to 35 or from 11 to 23, may also be used as the ink vehicle. These materials may have a melting point of from 50°C to 150°C, such as from 70°C to 120°C or from 75°C to 110°C, and a molecular weight (Mn) range of from 100 to 5,000, such as from 200 to 2,500 or from 300 to 1,500. Commercial examples include the UNILIN materials such as UNILIN 425 (Mn = 460), UNILIN 550 (Mn = 550), UNILIN 700 (Mn = 700), and the like.

A still further example includes hydrocarbon-based waxes, such as the homopolymers of polyethylene available from Petrolite and of the general formula 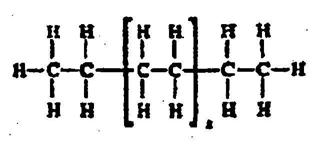 wherein x is an integer of from 1 to 200, such as from 5 to 150 or from 12 to 105. These materials may have a melting point of from 60°C to 150°C, such as from 70°C to 140°C or from 80°C to 130°C and a molecular weight (Mn) of from 100 to 5,000, such as from 200 to 4,000 or from 400 to 3,000. Example waxes include the line of waxes, such as POLYWAX 500 (Mn = 500), POLYWAX 655 (Mn = 655), POLYWAX 850 (Mn = 850), POLYWAX 1000 (Mn = 1,000), and the like.

Another example includes modified maleic anhydride hydrocarbon adducts of polyolefins prepared by graft copolymerization, such as those available from Petrolite and of the general formulas 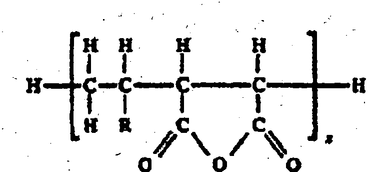 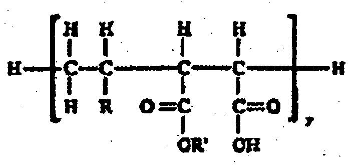 wherein R is an alkyl group with from 1 to 50, such as from 5 to 35 or from 6 to 28 carbon atoms, R' is an ethyl group, a propyl group, an isopropyl group, a butyl group, an isobutyl group, or an alkyl group with from 5 to 500, such as from 10 to 300 or from 20 to 200 carbon atoms, x is an integer of from 9 to 13, and y is an integer of from 1 to 50, such as from 5 to 25 or from 9 to 13, and having melting points of from 50°C to 150°C, such as from 60°C to 120°C or from 70°C to 100°C; those available from Petrolite and of the general formula 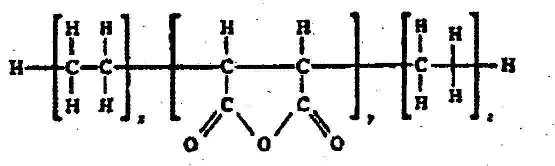 wherein x is an integer of from 1 to 50, such as from 5 to 25 or from 9 to 13, y is 1 or 2, and z is an integer of from 1 to 50, such as from 5 to 25 or from 9 to 13; and those available from Petrolite and of the general formula 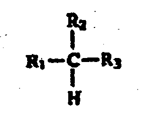 wherein R₁ and R₃ are hydrocarbon groups and R₂ is either of one of the general formulas 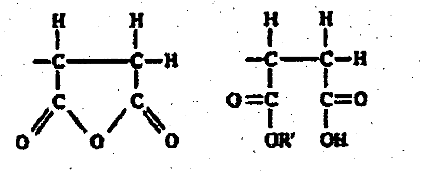 or a mixture thereof, wherein R' is an isopropyl group, which materials may have melting points of from 70°C to 150°C, such as from 80°C to 130°C or from 90°C to 125°C, with examples of modified maleic anhydride copolymers including CERAMER 67 (Mn = 655, Mw/Mn = 1.1), CERAMER 1608 (Mn = 700, Mw/Mn =1.7), and the like.

Additional examples of suitable ink vehicles for the phase change inks include rosin esters, such as glyceryl abietate (KE-100^{®}); polyamides; dimer acid amides; fatty acid amides, including ARAMID C; epoxy resins, such as EPOTUF 37001, available from Riechold Chemical Company; fluid paraffin waxes; fluid microcrystalline waxes; Fischer-Tropsch waxes; polyvinyl alcohol resins; polyols; cellulose esters; cellulose ethers; polyvinyl pyridine resins; fatty acids; fatty acid esters; poly sulfonamides, including KETJENFLEX MH and KETJENFLEX MS80; benzoate esters, such as BENZOFLEX S552, available from Velsicol Chemical Company; phthalate plasticizers; citrate plasticizers; maleate plasticizers; polyvinyl pyrrolidinone copolymers; polyvinyl pyrrolidone/polyvinyl acetate copolymers; novolac resins, such as DUREZ 12 686, available from Occidental Chemical Company; and natural product waxes, such as beeswax, montan wax, candelilla wax, GILSONITE (American Gilsonite Company), and the like; mixtures of linear primary alcohols with linear long chain amides or fatty acid amides, such as those with from 6 to 24 carbon atoms, including PARICIN 9 (propylene glycol monohydroxystearate), PARICIN 13 (glycerol monohydroxystearate), PARICIN 15 (ethylene glycol monohydroxystearate), PARICIN 220 (N(2-hydroxyethyl)-12-hydroxystearamide), PARICIN 285 (N,N'-ethylene-bis-12-hydroxystearamide), FLEXRICIN 185 (N,N'-ethylene-bis-ricinoleamide), and the like. Further, linear long chain sulfones with from 4 to 16 carbon atoms, such as diphenyl sulfone, n-arnyl sulfone, n-propyl sulfone, n-pentyl sulfone, n-hexyl sulfone, n-heptyl sulfone, n-octyl sulfone, n-nonyl sulfone, n-decyl sulfone, n-undecyl sulfone, n-dodecyl sulfone, n-tridecyl sulfone, n-tetradecyl sulfone, n-pentadecyl sulfone, n-hexadecyl sulfone, chlorophenyl methyl sulfone, and the like, are suitable ink vehicle materials.

In addition, the ink vehicles described in U.S. Patent No. 6,906,118 may also be used. Also suitable as ink vehicles are liquid crystalline materials as disclosed in, for example, U.S. Patent No. 5,122,187.

The ink vehicle may comprise one or more of the aforementioned suitable materials. As used herein, "one or more" and "at least one" refers to from 1 to 10, such as from 1 to 8 or from 1 to 5 of any given feature disclosed herein.

The ink vehicle may comprise from 25% to 99.5% by weight of the ink, for example from 30% to 90% or from 50% to 85% by weight of the ink.

Many ink vehicles of phase change inks have an electrical conductivity of essentially zero. Thus, conductivity enhancing agents are be added to the ink vehicle in order to provide consistent conductivity to the ink. The conductivity is used as an input signal for a level sensor in the ink reservoir of the ink jet device.

Prior components of a phase change ink that may have contributed to the electrical conductivity if the phase change inks were colorants such as pigments and dyes, and dodecyl benzene sulfonic acid (DDBSA), as disclosed in U.S. Patent No. 6,015,847. However, utilization of these ingredients as conductivity enhancing agents is problematic.

Colorants give the ink a certain color (brightness, chroma and hue), which in turn is dependent on the dye concentration in the ink. Once the color gamut of a complete ink has been specified, any adjusting of the electrical conductivity by changing the colorant concentration in the ink may be very difficult, or simply impractical. Moreover, many colorants have a limited solubility in the nonpolar matrix mixture of an ink vehicle due to the appreciable dipole moments of their molecules. In other words, the concentration of the colorants in the ink vehicle cannot be increased in an unlimited way without risking phase separation in the liquid phase state. In addition, not all colorants increase electrical conductivity in an ink formulation to the same degree, and many do not affect conductivity at all. Thus, use of colorants to impart conductivity is not practical, and does not achieve inks with consistent and reliable conductivity.

DDBSA was originally applied as a proton-donating developer for magenta inks and has also been used in inks as an inexpensive and very strong conductivity-enhancing agent. Although it dissolves readily in phase change inks, it has many shortcomings. The shortcomings of DDBSA include: (1) DDBSA chemically attacks vital mechanical parts in the printheads at relatively low concentrations and thus considerably shortens printhead lifetime; (2) DDBSA is a liquid at ambient temperature, which may plasticize the ink formulation; (3) DDBSA affects the viscosity of the liquefied ink under temperatures of operation, thus necessitating additional countermeasures during formulation; and (4) DDBSA has a limited lifetime at higher concentrations due to decay and degradation.

Thus, a suitable conductivity enhancing agent is still desired.

The conductivity enhancing agent for use in the present invention is an organic salt being tri-hexadecyl ammonium-trifluoro acetate, tri-hexadecyl ammonium-methyl sulfonate, tri-hexadecyl ammonium-trifluoromethyl sulfonate, or a mixture thereof.

The estimated half life of the organic salt under a constant temperature of about 120°C is from 15 days to 250 days, such as from 20 days to 225 days or from 20 days to 200 days. This indicates that the conductivity-enhancing agent disclosed herein remains stable for an extended period of time. In comparison, DDBSA has a half life of approximately 3 days. Thus, the conductivity enhancing agents remain active and detectable by the conductivity sensors within the printer for a period of time, which typically exceeds the time period of operation.

The phase change ink disclosed herein may contain one organic salt, or a mixture of one or more suitable organic salts, for example from 1 to 10 organic salts, such as from 1 to 4 or from 1 to 2 organic salts. Each organic salt is present in the ink in any effective amount, for example from 0.001 weight percent to 8 weight percent, such as from 0.1 weight percent to 5 weight percent or from 0.25 weight percent to 5 weight percent of the ink.

The organic salt described herein imparts a high electrical conductivity to phase change inks by sufficiently dissociating into molecular ions with high ion mobility. Specifically, the organic salt will dissociate into ions, that is, anions and cations, to provide the phase change ink with high electrical conductivity during operation of an ink jet device.

The conductivity of the phase change ink having the conductivity enhancing agent therein may be from 0.01 µS/cm to 5 µS/cm, such as from 0.05 µS/cm to 4 µS/cm or from 0.09 µS/cm to 2.5 µS/cm. Conductivity may be measured by any known method, and herein is measured under melt conditions at about 120°C by placing titanium electrodes in the molten ink and reading the resistivity output on a Rosemount Model 1054B LC Conductivity Meter at a frequency of 60 Hz. In general, the conductivity of a material can be measured in terms of the reciprocal of resistivity, which is a material specific and temperature dependent measurement for electrical resistance.

The organic salts disclosed herein are soluble in the nonpolar organic environment of phase change inks, demonstrate thermal stability in phase change inks when an ink jet device is operating, are waxy solids at room temperature, may positively influence the mechanical durability of printed, solid inks, and do not etch or attack printer parts which may contact the organic salts found in the phase change inks.

The phase change inks also contain at least one colorant, for example, from 1 to 10, such as from 1 to 4 or from 1 to 2 colorants. The colorant is present in the ink in any desired amount, typically from 0.5 to 75 percent by weight of the ink vehicle or ink vehicle/propellant mixture, for example from 1 to 50 percent by weight of the ink vehicle or ink vehicle/propellant mixture.

Examples of suitable colorants include pigments, dyes, mixtures of pigments and dyes, mixtures of pigments, mixtures of dyes, and the like. Any dye or pigment may be chosen, provided that it is capable of being dispersed or dissolved in the ink vehicle and is compatible with the other ink components.

Examples of suitable pigments include, but are not limited to, Violet PALIOGEN Violet 5100 (BASF); PALIOGEN Violet 5890 (BASF); HELIOGEN Green L8730 (BASF); LITHOL Scarlet D3700 (BASF); SUNFAST^{®} Blue 15:4 (Sun Chemical 249-0592); Hostaperm Blue B2G-D (Clariant); Permanent Red P-F7RK; Hostaperm Violet BL (Clariant); LITHOL Scarlet 4440 (BASF); Bon Red C (Dominion Color Company); ORACET Pink RF (Ciba); PALIOGEN Red 3871 K (BASF); SUNFAST^{®} Blue 15:3 (Sun Chemical 249-1284); PALIOGEN Red 3340 (BASF); SUNFAST® Carbazole Violet 23 (Sun Chemical 246-1670); LITHOL Fast Scarlet L4300 (BASF); Sunbrite Yellow 17 (Sun Chemical 275-0023); HELIOGEN Blue L6900, L7020 (BASF); Sunbrite Yellow 74 (Sun Chemical 272-0558); SPECTRA PAC^{®} C Orange 16 (Sun Chemical 276-3016); HELIOGEN Blue K6902, K6910 (BASF); SUNFAST^{®} Magenta 122 (Sun Chemical 228-0013); HELIOGEN Blue D6840, D7080 (BASF); Sudan Blue OS (BASF); NEOPEN Blue FF4012 (BASF); PV Fast Blue B2GO1 (Clariant); IRGALITE Blue BCA (Ciba); PALIOGEN Blue 6470 (BASF); Sudan Orange G (Aldrich), Sudan Orange 220 (BASF); PALIOGEN Orange 3040 (BASF); PALIOGEN Yellow 152, 1560 (BASF); LITHOL Fast Yellow 0991 K (BASF); PALIOTOL Yellow 1840 (BASF); NOVOPERM Yellow FGL (Clariant); Lumogen Yellow D0790 (BASF); Suco-Yellow L1250 (BASF); Suco-Yellow D1355 (BASF); Suco Fast Yellow D1 355, D1 351 (BASF); HOSTAPERM Pink E 02 (Clariant); Hansa Brilliant Yellow 5GX03 (Clariant); Permanent Yellow GRL 02 (Clariant); Permanent Rubine L6B 05 (Clariant); FANAL Pink D4830 (BASF); CINQUASIA Magenta (DU PONT), PALIOGEN Black L0084 (BASF); Pigment Black K801 (BASF); and carbon blacks such as REGAL 330^{TM} (Cabot), Carbon Black 5250, Carbon Black 5750 (Columbia Chemical), mixtures thereof and the like.

Examples of suitable dyes include Usharect Blue 86 (Direct Blue 86), available from Ushanti Color; Intralite Turquoise 8GL (Direct Blue 86), available from Classic Dyestuffs; Chemictive Brilliant Red 7BH (Reactive Red 4), available from Chemiequip; Levafix Black EB, available from Bayer; Reactron Red H8B (Reactive Red 31), available from Atlas Dye-Chem; D&C Red #28 (Acid Red 92), available from Warner-Jenkinson; Direct Brilliant Pink B, available from Global Colors; Acid Tartrazine ,available from Metrochem Industries.; Cartasol Yellow 6GF Clariant; Carta Blue 2GL, available from Clariant; and the like.

In embodiments, solvent dyes may be utilized. Examples of solvent dyes include spirit soluble dyes which are compatible with the ink vehicles disclosed herein. Examples of suitable spirit solvent dyes include Neozapon Red 492 (BASF); Orasol Red G (Ciba); Direct Brilliant Pink B (Global Colors); Aizen Spilon Red C-BH (Hodogaya Chemical); Kayanol Red 3BL (Nippon Kayaku); Spirit Fast Yellow 3G; Aizen Spilon Yellow C-GNH (Hodogaya Chemical); Cartasol Brilliant Yellow 4GF (Clariant); Pergasol Yellow CGP (Ciba); Orasol Black RLP (Ciba); Savinyl Black RLS (Clariant); Morfast Black Conc. A (Rohm and Haas); Orasol Blue GN (Ciba); Savinyl Blue GLS (Sandoz); Luxol Fast Blue MBSN (Pylam); Sevron Blue 5GMF (Classic Dyestuffs); Basacid Blue 750 (BASF), Neozapon Black X51 [C.I. Solvent Black, C.I. 12195] (BASF), Sudan Blue 670 [C.I. 61554] (BASF), Sudan Yellow 146 [C.I. 12700] (BASF), Sudan Red 462 [C.I. 260501] (BASF) and the like.

In embodiments, suitable colorants, dyes and/or pigments may be selected from those disclosed in U.S. Patent No. 6,726,755, U.S. Patent No. 6,472,523, U.S. Patent No. 6,476,219, U.S. Patent No. 6,673,139, U.S. Patent No. 6,713,614, U.S. Patent No. 6,755,902, U.S. Patent No. 6,576,747, U.S. Patent No. 6,576,748, U.S. Patent No. 6,590,082, U.S. Patent No. 6,646,111, U.S. Patent No. 6,663,703, U.S. Patent No. 6,860,931, U.S. Patent No. 6,835,238, U.S. Patent No. 6,958,406 and U.S. Patent No. 6,821,327.

Optionally, a propellant may be contained in the phase change ink. Suitable propellants for the phase change ink, present in any effective amount such as from 10 to 90 percent by weight, for example from 20 to 50 percent by weight, of the ink generally have melting points of from 50°C to 150°C, for example from 80°C to 120°C. In another embodiment, the propellants generally have a boiling point of from 180°C to 250°C, for example from 200°C to 230°C. Further, the surface tension of the propellant in its liquid state at the operating temperature of the ink may be from 20 to 65 dynes per centimeter, for example from 40 to 65 dynes per centimeter, to enhance refill rates, paper wetting, and color mixing. In addition, the propellants ideally have a viscosity at the operating temperature of the ink of from 1 to 20 mPa·s (cP), for example from 1 to 15 mPa·s (cP), to enhance refill, jettability, and substrate penetration. The propellant may also be thermally stable in its molten state so that it does not undergo decomposition to yield gaseous products or to form heater deposits.

Examples of suitable propellants for the phase change inks include, for example, water; hydrazine; alcohols, such as ethanol, propanol, butanol, 2,5-dimethyl-2,5-hexanediol, 3-hydroxy benzyl alcohol, and the like; cyclic amines and ureas, including 1,3-dimethyl urea, such as imidazole, substituted imidazoles, including 2-imidazolidone, 2-ethyl imidazole, 1,2,4-triazole, and the like; pyrazole and substituted pyrazoles, including 3,5-dimethyl pyrazole and the like; pyrazine; carboxylic acids; sulfonic acids; aldehydes and ketones; hydrocarbons, such as biphenyl, hexane, benzene; esters; phenols, including phenol, dichlorophenol, other halogen substituted phenols, and cresols; amides, such as propionamide, lactamide, and the like; imides; halocarbons; urethanes; ethers; sulfones, including dimethyl sulfone, methyl sulfone, diethyl sulfone, and diphenyl sulfone; sulfamides, such as methyl sulfamide; sulfonamides, such as ortho, para-toluenesulfonamide, methyl sulfonamide, and the like; phosphites; phosphonates; phosphates; alkyl sulfides, such as methyl sulfide; alkyl acetates, such as methyl acetate; sulfur dioxide; alkylene carbonates, such as propylene carbonate; succinimide; and the like. Sulfones, such as dimethyl sulfone, diethyl sulfone, diphenyl sulfone, and the like, and any mixtures thereof, may also be used.

The ink of embodiments may further include conventional additives to take advantage of the known functionality associated with such conventional additives. Such additives may include, for example, biocides, defoamers, slip and leveling agents, plasticizers, pigment dispersants, viscosity modifiers, antioxidants, absorbers, etc.

Optional biocides may be present in amounts of from 0.1 to 1.0 percent by weight of the ink. Suitable biocides include, for example, sorbic acid, 1-(3-chloroallyl)-3,5,7-triaza-1-azoniaadamantane chloride, commercially available as DOWICIL 200 (Dow Chemical Company), vinylene-bis thiocyanate, commercially available as CYTOX 3711 (American Cyanamid Company), disodium ethylenebis-dithiocarbamate, commercially available as DITHONE D14 (Rohm & Haas Company), bis(trichloromethyl)sulfone, commercially available as BIOCIDE N-1386 (Stauffer Chemical Company), zinc pyridinethione, commercially available as zinc omadine (Olin Corporation), 2-bromo-t-nitropropane-1,3-diol, commercially available as ONYXIDE 500 (Onyx Chemical Company), BOSQUAT MB50 (Louza, Inc.), and the like. In addition, other optional additives such as dispersing agents or surfactants may be present in the inks, typically in amounts of from 0.01 to 20 percent by weight. Plasticizers that may be used include pentaerythritol tetrabenzoate, commercially available as BENZOFLEX S552 (Velsicol Chemical Corporation), trimethyl titrate, commercially available as CITROFLEX 1 (Monflex Chemical Company), N,N-dimethyl oleamide, commercially available as HALCOMID M-18-OL (C. P. Hall Company), a benzyl phthalate, commercially available as SANTICIZER 278 (Ferro Corporation), and the like, may be added to the ink vehicle, and may constitute from 1 to 100 percent of the ink vehicle component of the ink. Plasticizers can either function as the ink vehicle or can act as an agent to provide compatibility between the ink propellant, which generally is polar, and the ink vehicle, which generally is non-polar.

The viscosity modifier may be (1) 2-hydroxybenzyl alcohol, (2) 4-hydroxybenzyl alcohol, (3) 4-nitrobenzyl alcohol, (4) 4-hydroxy-3-methoxy benzyl alcohol, (5) 3-methoxy-4-nitrobenzyl alcohol, (6) 2-amino-5-chlorobenzyl alcohol, (7) 2-amino-5-methylbenzyl alcohol, (8) 3-amino-2-methylbenzyl alcohol, (9) 3-amino-4-methyl benzyl alcohol, (10) 2(2-(aminomethyl) phenylthio) benzyl alcohol, (11) 2,4,6-trimethylbenzyl alcohol, (12) 2-amino-2-methyl-1,3-propanediol, (13) 2-amino-1-phenyl-1,3-propanediol, (14) 2,2-dimethyl-1-phenyl-1,3-propanediol, (15) 2-bromo-2-nitro-1,3-propanediol, (16) 3-tert-butylamino-1,2-propanediol, (17) 1,1-diphenyl-1,2-propanediol, (18) 1,4-dibromo-2,3-butanediol, (19) 2,3-dibromo-1,4-butanediol, (20) 2,3-dibromo-2-butene-1,4-diol, (21) 1,1,2-triphenyl-1,2-ethanediol, (22) 2-naphthalenemethanol, (23) 2-methoxy-1-naphthalenemethanol, (24) decafluoro benzhydrol, (25) 2-methylbenzhydrol, (26) 1-benzeneethanol, (27) 4,4'-isopropylidene bis(2-(2,6-dibromo phenoxy)ethanol), (28) 2,2'-(1,4-phenylenedioxy)diethanol, (29) 2,2-bis (hydroxymethyl)-2,2',2"-nitrilotriethanol, (30) di(trimethylolpropane), (31) 2-amino-3-phenyl-1-propanol, (32) tricyclohexylmethanol, (33) tris(hydroxymethyl) aminomethane succinate, (34) 4,4'-trimethylene bis(1-piperidine ethanol), (35) N-methyl glucamine, (36) xylitol, or mixtures thereof. When present, the viscosity modifier is present in the ink in any effective amount, such as from 30 percent to 55 percent by weight of the ink or from 35 percent to 50 percent by weight of the ink.

Optional antioxidants in the ink may protect the images from oxidation and also may protect the ink components from oxidation while existing as a heated melt in the ink reservoir. Examples of suitable antioxidants include (1) N,N'-hexamethylene bis(3,5-di-tert-butyl-4-hydroxy hydrocinnamamide) (IRGANOX 1098, available from Ciba-Geigy Corporation), (2) 2,2-bis(4-(2-(3,5-di-tert-butyl-4-hydroxyhydrocinnamoyloxy))ethoxyphenyl) propane (TOPANOL-205, available from ICI America Corporation), (3) tris(4-tert-butyl-3-hydroxy-2,6-dimethyl benzyl) isocyanurate (CYANOX 1790, 41,322-4, LTDP, Aldrich D12,840-6), (4) 2,2'-ethylidene bis(4,6-di-tert-butylphenyl) fluoro phosphonite (ETHANOX-398, available from Ethyl Corporation), (5) tetrakis(2,4-di-tert-butylphenyl)-4,4'-biphenyl diphosphonite (ALDRICH 46,852-5; hardness value 90), (6) pentaerythritol tetrastearate (TCI America #PO739), (7) tributylammonium hypophosphite (Aldrich 42,009-3), (8) 2,6-di-tert-butyl-4-methoxyphenol (Aldrich 25,106-2), (9) 2,4-di-tert-butyl-6-(4-methoxybenzyl) phenol (Aldrich 23,008-1), (10) 4-bromo-2,6-dimethylphenol (Aldrich 34,951-8), (11) 4-bromo-3,5-didimethylphenol (Aldrich B6,420-2), (12) 4-bromo-2-nitrophenol (Aldrich 30,987-7), (13) 4-(diethyl aminomethyl)-2,5-dimethylphenol (Aldrich 14,668-4), (14) 3-dimethylaminophenol (Aldrich D14,400-2), (15) 2-amino-4-tert-amylphenol (Aldrich 41,258-9), (16) 2,6-bis(hydroxymethyl)-p-cresol (Aldrich 22,752-8), (17) 2,2'-methylenediphenol (Aldrich B4,680-8), (18) 5-(diethylamino)-2-nitrosophenol (Aldrich 26,951-4), (19) 2,6-dichloro-4-fluorophenol (Aldrich 28,435-1), (20) 2,6-dibromo fluoro phenol (Aldrich 26,003-7), (2l) a-trifluoro-o-creso-1 (Aldrich 21,979-7), (22) 2-bromo-4-fluorophenol (Aldrich 30,246-5), (23) 4-fluorophenol (Aldrich F1,320-7), (24) 4-chlorophenyl-2-chloro-1,1,2-trifluoroethyl sulfone (Aldrich 13,823-1), (25) 3,4-difluoro phenylacetic acid (Aldrich 29,043-2), (26) 3-fluorophenylacetic acid (Aldrich 24,804-5), (27) 3,5-difluoro phenylacetic acid (Aldrich 29,044-0), (28) 2-fluorophenylacetic acid (Aldrich 20,894-9), (29) 2,5-bis (trifluoromethyl) benzoic acid (Aldrich 32,527-9), (30) ethyl-2-(4-(4-(trifluoromethyl) phenoxy) phenoxy) propionate (Aldrich 25,074-0), (31) tetrakis (2,4-di-tert-butyl phenyl)-4,4'-biphenyl diphosphonite (Aldrich 46,852-5), (32) 4-tert-amyl phenol (Aldrich 15,384-2), (33) 3-(2H-benzotriazol-2-yl)-4-hydroxy phenethylalcohol (Aldrich 43,071-4), NAUGARD 76, NAUGARD 445, NAUGARD 512, AND NAUGARD 524 (manufactured by Uniroyal Chemical Company), and the like, as well as mixtures thereof. The antioxidant, when present, may be present in the ink in any desired or effective amount, such as from 0.25 percent to 10 percent by weight of the ink or from 1 percent to 5 percent by weight of the ink.

The ink can also optionally contain a UV absorber. The optional UV absorbers primarily protect the generated images from UV degradation. Specific examples of suitable UV absorbers include (1) 2-bromo-2',4-dimethoxyacetophenone (Aldrich 19,948-6), (2) 2-bromo-2',5'-dimethoxyacetophenone (Aldrich 10,458-2), (3) 2-bromo-3'-nitroacetophenone (Aldrich 34,421-4), (4) 2-bromo-4'-nitroacetophenone (Aldrich 24,561-5), (5) 3',5'-diacetoxyacetophenone (Aldrich 11,738-2), (6) 2-phenylsulfonyl acetophenone (Aldrich 34,150-3), (7) 3'-aminoacetophenone (Aldrich 13,935-1), (8) 4'-aminoacetophenone (Aldrich A3,800-2), (9) 1H-benzotriazole-1-acetonitrile (Aldrich 46,752-9), (10) 2-(2H-benzotriazol-2-yl)-4,6-di-tert-pentylphenol (Aldrich 42,274-6), (11) 1,1-(1,2-ethanediyl)bis(3,3,5,5-tetramethylpiperazinone) (commercially available from Goodrich Chemicals), (12) 2,2,4-trimethyl-1,2-hydroquinoline (commercially available from Mobay Chemical), (13) 2-(4-benzoyl-3-hydroxy phenoxy)ethylacrylate, (14) 2-dodecyl-N-(1,2,2,6,6-pentamethyl-4-piperidinyl) succinimide (commercially available from Aldrich Chemical Co., Milwaukee, Wis.), (15) 2,2,6,6-tetramethyl-4-piperidinyl/β-tetramethyl-3,9-(2,4,8,10-tetraoxo spiro(5,5)-undecane) diethyl-1,2,3,4-butane tetracarboxylate (commercially available from Fairmount), (16) N-(p-ethoxycarbonylphenyl)-N'-ethyl-N'-phenylformadine (commercially available from Givaudan), (17) 6-ethoxy-1,2-dihydro-2,2,4-trimethylquinoline (commercially available from Monsanto Chemicals), (18) 2,4,6-tris-(N-1,4-dimethylpentyl-4-phenylenediamino)-1,3,5-triazine (commercially available from Uniroyal), (19) 2-dodecyl-N-(2,2,6,6-tetrame- thyl-4-piperidinyl) succinimide (commercially available from Aldrich Chemical Co.), (20) N-(1-acetyl-2,2,6,6-tetramethyl-4-piperidinyl)-2-dodecyl succinimide (commercially available from Aldrich Chemical Co.), (21) (1,2,2,6,6-pentamethyl-4-piperidinyl/β-tetramethyl-3,9-(2,4,8,10-tetra oxo-spiro-(5,5)undecane)diethyl)-1,2,3,4-butane tetracarboxylate (commercially available from Fairmount), (22) (2,2,6,6-tetramethyl-4-piperidinyl)-1,2,3,4-butane tetracarboxylate (commercially available from Fairmount), (23) nickel dibutyl dithio carbamate (commercially available as UV-Chek AM-105 from Ferro), (24) 2-amino-2',5-dichlorobenzophenone (Aldrich 10,515-5), (25) 2'-amino-4',5'-dimethoxyacetophenone (Aldrich 32,922-3), (26) 2-benzyl-2-(dimethylamino)-4'-morpholino butyrophenone (Aldrich 40,564-7), (27) 4'-benzyloxy-2'-hydroxy-3'-methylacetophenone (Aldrich 29,884-0), (28) 4,4'-bis(diethylamino) benzophenone (Aldrich 16,032-6), (29) 5-chloro-2-hydroxy benzophenone (Aldrich C4,470-2), (30) 4'-piperazinoacetophenone (Aldrich 13,646-8), (31) 4'-piperidinoacetophenone (Aldrich 11,972-5), (32) 2-amino-5-chlorobenzophenone (Aldrich A4,556-4), (33) 3,6-bis(2-methyl-2-morpholinopropionyl)-9-octylcarbazole (Aldrich 46,073-7), and the like, as well as mixtures thereof. When present, the optional UV absorber may be present in the ink in any desired or effective amount, such as from 1 percent to 10 percent by weight of the ink or from 3 percent to 5 percent by weight of the ink.

The phase change ink compositions may be prepared by combining all of the ingredients (the organic base and the acid being considered individual ingredients), heating the mixture to at least its melting point, for example from 50°C to 120°C, and stirring the mixture, for example from 5 seconds to 10 minutes or more, to obtain a substantially homogeneous, uniform melt. When pigments are the selected colorants, the molten mixture may be subjected to grinding in an attritor or ball mill apparatus to effect dispersion of the pigment in the ink vehicle. Once formed, the ink may be cooled to room temperature, for example, from 23°C to 27°C, wherein it is ready for addition into an ink jet device.

As an alternative, the phase change inks disclosed herein may be prepared by first generating the organic salt. First, the organic base is melted at a temperature of from 80°C to 160°C, such as from 85°C to 150°C or from 90°C to 140°C. Once the organic base has melted, the organic base may be stirred, and the acid is added. The molten combination of organic base and acid is comprised of from 60 weight percent to 95 weight percent organic base, such as from 63 weight percent to 95 weight percent or from 68 weight percent to 95 weight percent of organic base in the molten combination. The remaining portion of the molten combination is comprised of the acid. The cation of the organic base reacts with the anion of the acid forming the organic salt disclosed herein. The melt is maintained from 5 minutes to 2 hours, such as from 10 minutes to 1.5 hours or from 15 minutes to 1 hour. The molten organic salt formed is allowed to cool and harden. The organic salt may then be added to a molten ink vehicle.

Printed images may be generated with the ink described herein by incorporating the ink into an ink jet device, for example a thermal ink jet device, an acoustic ink jet device or a piezoelectric ink jet device, and concurrently causing droplets of the molten ink to be ejected in a pattern onto a substrate such as paper or transparency material, which can be recognized as an image. The ink is typically included in the at least one reservoir connected by any suitable feeding device to the ejecting channels and orifices of the ink jet head for ejecting the ink. In the jetting procedure, the ink jet head may be heated, by any suitable method, to the jetting temperature of the inks. The phase change inks are thus transformed from the solid state to a molten state for jetting. "At least one" or "one or more" as used to describe components of the ink jet device, such as the ejecting channels, orifices, etc., refers to from 1 to 2 million, such as from 1000 to 1.5 million or 10,000 to 1 million of any such component found in the ink jet device. "At least one" or "one or more" as used to describe other components of the ink jet device such as the ink jet head, reservoir, feeder, etc., refers to from 1 to 15, such as from 1 to 8 or from 1 to 4 of any such component found in the ink jet device.

The inks can also be employed in indirect (offset) printing ink jet applications, wherein when droplets of the melted ink are ejected in an imagewise pattern onto a recording substrate, the recording substrate is an intermediate transfer member and the ink in the imagewise pattern is subsequently transferred from the intermediate transfer member to a final recording substrate, such as paper or transparency.

The phase change ink having the conductivity enhancing agent disclosed herein may be utilized in any ink jet device, and are particularly suitable for use in devices that measure ink conductivity in the reservoirs in determining an amount of ink remaining in the at least one reservoir. Without limiting the disclosure herein, it is theorized that the ink reservoirs for each of the colors, such as black, cyan, magenta, and yellow, are each individually equipped with sensors having metal electrodes. Within the printer, these electrodes are connected to a monitoring facility which measures conductance, and hence conductivity, by applying a voltage to the electrodes. The measured conductance is then compared to a number, which is stored in the memory of the processor unit of the printer. If the difference between a measured value and a stored value of conductance becomes less than a threshold value, a signal is sent to the heater unit of the ink jet device, which will melt solid ink into the reservoir, until the difference is minimized or becomes zero.

To summarize, when the conductivity readings are considered to be statistically distributed over time, an average value that may be constant over time and a variation derived by standard deviation is obtained. The average value of conductivity (and a desirable narrow range of variation) enables the sensor(s) in the ink reservoir to distinguish between "full" and "empty" states. If "empty" is measured in the reservoir, additional ink may be liquefied and supplied to the "empty" reservoir. The additives disclosed herein provide stable conductivity readings over time, while inert toward ink components and ink jet device parts.

Embodiments described above will now be further illustrated by way of the following examples.

### 1. Synthesis and Characterization of the Ink Conductivity Enhancers

### Example 1

### Synthesis of Tri-Hexadecyl Ammonium-Trifluoro Acetate

About 100 grams of pre-melted ARMEEN 316 (MW=689) was added to a 236.56 mL flask with a magnetic stir bar. The flask was placed in a 100°C oil bath and stirring was begun. About 16.5 g of trifluoroacetic acid (MW=114) was carefully added. Vigorous bubbling was observed. After stirring for about a half-hour, the contents were poured into an aluminum mold and allowed to solidify.

### Example 2

### Synthesis of Tri-Hexadecyl Ammonium-Methyl Sulfonate

About 50 grams of pre-melted ARMEEN 316 (MW=689) was added to a 118.28 mL flask with a magnetic stir bar. The flask was placed in a 100°C oil bath and stirring was begun. About 7.0 g of methane sulfonic acid (MW=96) was carefully added. Vigorous bubbling was observed. After stirring for about a half-hour, the contents were poured into an aluminum mold and allowed to solidify.

### Example 3

### Synthesis of Tri-Hexadecyl Ammonium-Trifluoromethyl Sulfonate

About 47 grams of pre-melted ARMEEN 316 (MW=689) was added to a 118.28 mL flask with a magnetic stir bar. The flask was placed in a 100°C oil bath and stirring was begun. About 10.0 g of trifluoro methane sulfonic acid (MW=150) was carefully added. Vigorous bubbling was observed. After stirring for about a half-hour, the contents were poured into an aluminum mold and allowed to solidify.

### 2. Performance Characterization of the Ink Conductivity Enhancers

### 2.1 Preparation of Mixtures with Hot-Melt Ink Base and Inks

### Example 4

### Preparation for Conductivity Scans

397 grams of a POLYWAX^{®} based phase change ink carrier ("Ink Carrier") was heated in an oven at a temperature of about 135°C until molten, for a total time of approximately 2.5 hours. After this time, the liquid ink base was poured into a warm (for example, about 120°C) metal beaker. The beaker was then positioned in a 120°C pre-heated heating mantle, and stirring of the liquid base was immediately started. After ten minutes, thermal equilibrium was reached, and the conductivity meter probe was inserted into the ink melt. By inserting the conductivity meter probe into the ink melt, the temperature dropped to below 120°C. After an additional waiting time of approximately 30 minutes, thermal equilibrium was regained, and a baseline conductivity value of 0.0023 µS/cm was measured.

Subsequently, increasing amounts of tri-hexadecyl ammonium-trifluoromethyl sulfonate were added to the ink melt, and conductivity measurements were performed.

The same steps were performed to prepare conductivity measurements with tri-hexadecyl ammonium-methyl sulfonate (blended into 397 grams of the Ink Carrier, ink base conductivity of 0.0021 µS/cm), tri-hexadecyl ammonium-trifluoro acetate (blended into 336.5 grams of the phase change ink carrier, ink base conductivity of 0.0022 µS/cm), and DDBSA (used as a reference, blended into 402 grams of the Ink Carrier, ink base conductivity of 0.0025 µS/cm).

### Example 5

### Preparation for study of impact on viscosity and mechanical properties of the Ink Carrier

Five batches of 400 grams each of an Ink Carrier were heated in an oven until molten, for a total time of approximately 2.5 hours. Subsequently, each liquid ink base was poured into an individual warm (for example, about 120°C) metal beaker. Each beaker was then positioned in a 120°C preheated heating mantle, and the liquid base was immediately stirred. After thermal equilibrium was achieved, varying amounts of tri-hexadecyl ammonium-trifluoro acetate were added:
(1) 1 gram, translating into a 0.25 wt% solution of trifluoro acetate in the Ink Carrier
(2) 3.02 grams, translating into a 0.75 wt% solution of trifluoro acetate in the Ink Carrier,
(3) 5.06 grams, translating into a 1.25 wt% solution of trifluoro acetate in the Ink Carrier,
(4) 10.26 grams, translating into a 2.5 wt% solution of trifluoro acetate in the Ink Carrier, and
(5) 21.05 grams, translating into a 5.0 wt% solution of trifluoro acetate in the Ink Carrier.

The solutions were stirred for approximately another 45 minutes, and then poured into aluminum pans for solidification.

### Example 6

### Preparation for study of impact on viscosity and mechanical properties of magenta ink

409.5 grams of a magenta POLYWAX^{®} based phase change ink ("Magenta Ink") were heated in an oven set to about 135°C until molten, for a total time of approximately 2 hours. After this period, the ink was poured into a warm (for example, about 120°C) metal beaker. The beaker was then placed in a 120°C preheated heating mantle, and the liquid ink was stirred immediately. After about 25 minutes, thermal equilibrium was reached, and 21.55 grams of tri-hexadecyl ammonium-trifluoro acetate was added. This 5 weight percent solution of trifluoro acetate in magenta ink was then stirred at 120°C for another hour, before pouring it into aluminum pans for solidification.

This procedure was repeated two more times with (1) 414.75 grams of magenta ink and 21.83 grams of tri-hexadecyl ammonium-methyl sulfonate, and (2) 417.65 grams of magenta ink and 21.95 grams of tri-hexadecyl ammonium-trifluoromethyl sulfonate, thus producing solutions of 5 weight percent of the respective salts in magenta ink.

### 2.2 Measurement of Concentration Dependence of Conductivity

### Example 7

### Measurements of electrical conductivity on a DDBSA blend with Ink Carrier for reference purposes

While being stirred at 120°C, prescribed amounts of DDBSA were added in several steps to 402 grams of a phase change ink carrier, which was prepared as described above in Example 4. After a waiting for approximately 30 minutes, the electrical conductivity was determined, and another portion of DDBSA was added. The amounts of DDBSA added, the concentration of DDBSA, and conductivity readings are summarized in Table 1 below.

**Table 1**

| Grams DDBSA Added | Weight Percent DDBSA | Conductivity, µS/cm |
|---|---|---|
| 0.00 | 0.00 | 0.0025 |
| 0.56 | 0.14 | 0.16 |
| 1.36 | 0.47 | 0.27 |
| 1.08 | 0.74 | 0.46 |

### Example 8

### Measurements of electrical conductivity on Ink Carrier tri-hexadecyl ammonium-trifluoromethyl sulfonate mixtures

While stirring at 120°C, prescribed amounts of tri-hexadecyl ammonium-trifluoromethyl sulfonate were added in several steps to 397 grams of Ink Carrier, which had been prepared as described in Example 4. After a waiting time of approximately 30 minutes, the electrical conductivity was determined using a Rosemount Model 10548 LC Conductivity Meter at a frequency of 60 Hz, and another portion of tri-hexadecyl ammonium-trifluoromethyl sulfonate was added. Amounts of tri-hexadecyl ammonium-trifluoromethyl sulfonate added, the concentration of tri-hexadecyl ammonium-trifluoromethyl sulfonate, and the conductivity readings are summarized below in Table 2.

**Table 2**

| Grams Tri-Hexadecyl Ammonium-Trifluoromethyl Sulfonate Added | Weight Percent Tri-Hexadecyl Ammonium-Trifluoromethyl Sulfonate | Conductivity, µS/cm |
|---|---|---|
| 0.00 | 0.00 | 0.0021 |
| 4.01 | 1.00 | 0.26 |
| 4.20 | 2.03 | 0.62 |
| 4.11 | 3.01 | 1.10 |

This same procedure was repeated for tri-hexadecyl ammonium-trifluoro acetate, and tri-hexadecyl ammonium-methyl sulfonate. The results are summarized in Tables 3 and 4 below.

**Table 3**

| Grams Tri-Hexadecyl Ammonium-Trifluoro Acetate Added | Weight Percent Tri-Hexadecyl Ammonium-Trifluoro Acetate | Conductivity, µS/cm |
|---|---|---|
| 0.00 | 0.00 | 0.0023 |
| 3.31 | 0.97 | 0.054 |
| 3.39 | 1.95 | 0.10 |
| 3.39 | 2.91 | 0.15 |

**Table 4**

| Grams Tri-Hexadecyl Ammonium-Methyl Sulfonate Added | Weight Percent Tri-Hexadecyl Ammonium-Methyl Sulfonate | Conductivity, µS/cm |
|---|---|---|
| 0.00 | 0.00 | 0.0021 |
| 4.09 | 1.02 | 0.11 |
| 4.08 | 2.01 | 0.23 |
| 4.10 | 3.00 | 0.38 |

### 2.3. Stability of Conductivity over a Longer Period

### Example 9

### Measurements of electrical conductivity over a 6-dav period on a DDBSA blend with Ink Carrier as a control

Following the procedure outlined in Example 4, a solution of DDBSA in an Ink Carrier was made, which had an initial conductivity of 1.52 µS/cm at 120°C. This solution was kept at a temperature of about 120°C and stirred for approximately 6 days, while its electrical conductivity was measured in irregular time intervals.
The electrical conductivity decreased over time for such an over-concentrated solution. The kinetic model had a time constant of about 0.24 d⁻¹ for the best fit, and the half-life time was determined to be approximately 2.7 days.

### Example 10

### Measurements of electrical conductivity over a 6-day period on a blend of tri-hexadecyl ammonium-trifluoromethyl sulfonate with Ink Carrier

Following the procedure outlined in Example 4, a solution of tri-hexadecyl ammonium-trifluoromethyl sulfonate in an Ink Carrier was made, which had an initial conductivity of about 1.08 µS/cm at temperature of about 120°C. This solution was kept at a temperature of about 120°C and stirred for approximately 5 days, while its electrical conductivity was measured in irregular time intervals.

The kinetic model had a time constant of about 0.011 d⁻¹ for the first-order fit, and the half-life time was determined to be about 63 days.

### Example 11

### Measurements of electrical conductivity over an approximate 6-day period on a blend of tri-hexadecyl ammonium-methyl sulfonate with Ink Carrier

Following the procedure outlined in Example 4, a solution of tri-hexadecyl ammonium-methyl sulfonate in an Ink Carrier was made, which had an initial conductivity of about 0.38 µS/cm at about 120°C. This solution was kept at a temperature of about 120°C for almost 6 days, while its electrical conductivity was measured in irregular time intervals.

The kinetic model had a time constant of about 0.0048 d⁻¹ for the first-order fit, and the half-life time was determined to be about 143 days.

We performed similar tests as described in Examples 9, 10 and 11, for tri-hexadecyl ammonium-trifluoro acetate. Based on the results, simple kinetic models for the conductivity drop-off were calculated. The model parameters are summarized below in Table 5.

**Table 5**

| Name of Electrolyte | Concentration in Ink Carrier, wt% | Initial Conductivity, µS/cm | Order of Model | Rate Constant, Day⁻¹ | Half-life Period, Days |
|---|---|---|---|---|---|
| DDBSA | 3.80 | 1.520 | 2.3 | 0.241 | 2.71 |
| Tri-Hexadecyl Ammonium-Trifluoro Acetate | 2.91 | 0.153 | 5.7 | 1692 | 20.3 |
| Tri-Hexadecyl Ammonium-Methyl Sulfonate | 3.00 | 0.383 | 1.0 | 0.005 | 143 |
| Tri-Hexadecyl Ammonium-Trifluoromethyl Sulfonate | 3.01 | 1.081 1 | 1.0 | 0.011 | 63 |

The data from Table 5 suggest a higher stability of conductivity readings for solutions of tri-hexadecyl ammonium-methyl sulfonate and tri-hexadecyl ammonium-trifluoromethyl sulfonate, when compared to a solution of DDBSA in the Ink Carrier.

### 2.4 Impact of Conductivity Enhancers on other Ink Properties

One purpose of the above-described organic salts is to give the hot-melt inks a certain stable value of electrical conductivity. Thus, their influence on other properties of the ink should be relatively inconsequential.

The following examples detail various additives and their influence on a variety of ink properties.

### 2.4.1 Viscosity

### Example 12

### Measurements of viscosity of various solutions at 140°C

Dynamic oscillatory shear time scans were performed with an Advanced Rheometric Expansion System (ARES) Rheometer from TA Instruments, Inc., using a Cone- and Plate geometry. The dynamic oscillatory shear time scans were performed at about 140°C on all five solutions from Example 5, and on an Ink Carrier without a conductivity enhancing additive, using 50 mm diameter cone and plate combination of tools. Strain was about 70%, and the frequency was about 5 rad/s. Three measurements were done for each composition. The average complex viscosities are listed in Table 6.

**Table 6**

| Wt% Tri-Hexadecyl Ammonium-Trifluoro Acetate | Complex Viscosity, mPa·s(cP) |
|---|---|
| 0.00 | 9.39 |
| 0.25 | 9.24 |
| 0.75 | 9.30 |
| 1.25 | 9.23 |
| 2.50 | 9.34 |
| 5.00 | 9.11 |

Previously, the complex viscosity of pure tri-hexadecyl ammonium-trifluoro acetate was been measured at about 140°C, using the same dynamic parameters. It was determined to be 5.90 mPa·s centipoise (cP)).Therefore, it could be expected that the new additive would have a viscosity-depressing influence in the ink base formulation.

The data in Table 6 demonstrates that tri-hexadecyl ammonium-tiifluoro acetate has a very slight viscosity-lowering influence at 140°C, amounting to approximately 0.04 mPa·s/wt% (cP/wt%).

### Example 13

### Measurements of viscosity of 5 weight percent solutions in magenta ink at 110°C

Steady shear rate ramp scans on an AR-1000 Rheometer from TA Instruments, Inc. were performed at about 110°C on solutions from Example 6, which container 5 weight percent of tri-hexadecyl ammonium-trifluoro acetate, tri-hexadecyl ammonium-methyl sulfonate, and tri-hexadecyl ammonium-trifluoromethyl sulfonate, and on magenta ink without a conductivity enhancing additive, using 40 mm diameter cone and plate combination of tools. The rate was changed between 1000 and 39 sec⁻¹. Two scans were measured on each mixture, and the average viscosity values are shown in Table 7 below.

**Table 7**

| Mixture | Viscosity, Centipoises | Viscosity Increment, mPa·s/wt% (cP/wt%) |
|---|---|---|
| Magenta Ink | 10.56 | - |
| 5wt% Tri-Hexadecyl Ammonium-Trifluoro Acetate | 10.45 | -0.02 |
| 5wt% Tri-Hexadecyl Ammonium-Methyl Sulfonate | 10.75 | +0.04 |
| 5wt% Tri-Hexadecyl Ammonium-Trifluoromethyl Sulfonate | 11.18 | +0.12 |

Previously, shear viscosities of pure tri-hexadecyl ammonium-trifluoro acetate, tri-hexadecyl ammonium-methyl sulfonate, and tri-hexadecyl ammonium-trifluoromethyl sulfonate had been measured at about 110°C. Values of 10.8, 21.4, and 22.5 mPa·s (cP) were determined, respectively. This data explains the positive and negative viscosity increments shown in Table 7. For tri-hexadecyl ammonium-trifluoro acetate, we see almost no impact on viscosity at about 110°C.

### 2.4.2 Glass Transition

### Example 14

### Measurements of maximum in the tanδ-curve from DMA scans of various solutions

Dynamic Mechanical Analysis (DMA) temperature scans using a RSA II Solids Analyzer (obtained from Rheometric Scientific) were performed at a frequency of 1Hz on all five solutions from Example 5, and on a pure phase change ink carrier, using a dual cantilever geometry. Two measurements were done for each composition. Maxima in the tanδ vs. temperature curves were determined, and the temperatures at maximum were reported as glass transition temperatures. The average glass transition temperatures are listed below in Table 8.

**Table 8**

| Wt% Tri-Hexadecyl Ammonium-Trifluoro Acetate | T_{g}, C° |
|---|---|
| 0.00 | 13.1 |
| 0.25 | 12.7 |
| 0.75 | 11.8 |
| 1.25 | 11.0 |
| 2.50 | 10.5 |
| 5.00 | 9.8 |

The data in Table 8 shows, that there is a relatively strong lowering influence of tri-hexadecyl ammonium-trifluoro acetate on the glass transition temperature of the phase change ink carrier, amounting to approximately -0.61 K/wt% (Kelvin/weight percent). This additive effectively tends to soften the ink base. This is confirmed by lower measured elastic storage moduli (E') in the solutions that contain such an additive, as compared to those measured in the unmodified ink base.

### Example 15

### Measurements of T_{g} by DMA of 5 weight percent solutions in magenta ink

DMA temperature scans were performed at a frequency of 1Hz on all three solutions from Example 6, which contained 5 weight percent of tri-hexadecyl ammonium-trifluoro acetate, tri-hexadecyl ammonium-methyl sulfonate, and tri-hexadecyl ammonium-trifluoromethyl sulfonate, and on the reference sample of magenta ink without a conductivity enhancing additive, using dual cantilever geometry. One scan was measured on each mixture. The thermo-mechanical behavior of the ink is characterized by an existence of two maxima in the tanδ-curve, indicating two glass transition temperatures. Both glass transition temperatures, and their increment factors due to mixing with the additives are shown in Table 9.

**Table 9**

| Mixture | T_{g1}, °C | T_{g1} Increment, K/wt% | T_{g2}, °C | T_{g2} Increment, K/wt% |
|---|---|---|---|---|
| Magenta Ink | -16.8 | - | 12.7 | - |
| 5wt% Tri-Hexadecyl Ammonium-Trifluoro Acetate | -12.8 | +0.80 | 9.7 | -0.60 |
| 5wt% Tri-Hexadecyl Ammonium-Methyl Sulfonate | -16.4 | +0.08 | 10.5 | -0.44 |
| 5wt% Tri-Hexadecyl Ammonium-Trifluoromethyl Sulfonate | -15.1 | +0.34 | 12.0 | -0.14 |

The data from Table 9 suggests a strong influence of tri-hexadecyl ammonium-trifluoro acetate on the glass transition temperatures of an ink, and a relatively weak influence of tri-hexadecyl ammonium-trifluoromethyl sulfonate.

### 2.4.3 Toughness

Toughness is a desirable property of a solid ink, which is directly proportional to its durability when brought into contact with the media. In simple terms, the higher the toughness, the better the durability, and the better the performance of the ink on the media.

A measure for toughness is the area under the tanδ vs. temperature curve in a semi-logarithmic plot of DMA measurement results. The size of this calculated area is directly proportional to toughness.

### Example 16

### Measurements of area under the tanδ-curve from DMA scans of various solutions

DMA temperature scans were performed at a frequency of 1Hz on all five solutions from Example 5, and on pure phase change ink carrier, using dual cantilever geometry. Two measurements were done for each composition. The area under the tanδ vs. temperature curves was determined, and reported as a measure for ink toughness. The average areas under the respective curves are listed in Table 10 below.

**Table 10**

| Wt% Tri-Hexadecyl Ammonium-Trifluoro Acetate | Area |
|---|---|
| 0.00 | 23.2 |
| 0.25 | 22.3 |
| 0.75 | 24.0 |
| 1.25 | 21.5 |
| 2.50 | 23.8 |
| 5.00 | 21.1 |

The data in Table 10 shows that there is only a weak lowering influence of tri-hexadecyl ammonium-trifluoro acetate on the toughness of a phase change ink carrier, amounting to approximately -0.32 units/wt%. The additive had almost no influence on ink base toughness in the concentration interval under consideration, but it may make the ink base more brittle at concentrations that are above 5 weight percent.

### Example 17

### Measurements of area under the tanδ -curve from DMA scans of 5 weight percent solutions in magenta ink

DMA temperature scans were performed at a frequency of 1Hz on all three solutions from Example 6, which contained 5 weight percent of tri-hexadecyl ammonium-trifluoro acetate, tri-hexadecyl ammonium-methyl sulfonate, and tri-hexadecyl ammonium-trifluoromethyl sulfonate, and on the reference sample of magenta ink without a conductivity enhancing additive, using dual cantilever geometry. One scan was measured on each mixture. The ink toughness was determined by integrating the area under the two maxima in the tanδ-curve, which were mentioned in Example 15. Ink toughness, and toughness increment factors due to mixing with the new additives are shown below in Table 11.

**Table 11**

| Mixture | Area, arb. units | Area Increment, units/wt% |
|---|---|---|
| Magenta Ink | 14.8 | - |
| 5 wt% Tri-Hexadecyl Ammonium-Trifluoro Acetate | 13.8 | -0.20 |
| 5 wt% Tri-Hexadecyl Ammonium-Methyl Sulfonate | 13.2 | -0.32 |
| 5 wt% Tri-Hexadecyl Ammonium-Trifluoromethyl Sulfonate | 15.9 | +0.22 |

The data from Table 11 suggests a weak influence of all three additives on ink toughness, with a weak tendency of tri-hexadecyl ammonium-trifluoro acetate and tri-hexadecyl ammonium-methyl sulfonate to make the ink more brittle, and a weak tendency of tri-hexadecyl ammonium-trifluoromethyl sulfonate to make the ink tougher.

## Claims

1. A phase change ink having an ink vehicle, at least one colorant, and a conductivity enhancing agent, wherein the conductivity enhancing agent is an organic salt being tri-hexadecyl ammonium-trifluoro acetate, tri-hexadecyl ammonium-methyl sulfonate, tri-hexadecyl ammonium-trifluoromethyl sulfonate, or a mixture thereof.

2. The ink according to claim 1, wherein the conductivity of the phase change ink is in the range from 0.01 to 5 µS/cm measured under melt conditions at about 120°C by placing titanium electrodes in the molten ink and reading the resistivity output on a Rosemount Model 1054B LC Conductivity Meter at a frequency of 60 Hz.

3. The ink according to claim 1, wherein the ink vehicle is a solid at a temperature below 40°C and has a viscosity from 1 to 20 mPa·s (centipoise) at a jetting temperature of from 50 to 150°C, said viscosity being measured using an Advanced Rheometric Expansion System (ARES) Rheometer from TA Instruments, Inc., using a Cone- and Plate geometry.

4. The ink according to claim 1, wherein the ink vehicle is selected from the group consisting of paraffins, microcrystalline waxes, polyethylene waxes, ester waxes, fatty acids and other waxy materials, fatty amide containing materials, sulfonamide materials, resinous materials made from tall oil rosins, resinous materials made from rosin esters, ethylene/propylene copolymers, urethane derivatives of oxidized synthetic or petroleum waxes, n-paraffinic, branched paraffinic or naphthenic hydrocarbons, highly branched hydrocarbons, high molecular weight linear alcohols, hydrocarbon-based waxes, modified maleic anhydride hydrocarbon adducts of polyolefins, and mixtures thereof.

5. An ink jet system, comprising:
at least one phase change ink having an ink vehicle and a conductivity enhancing agent, wherein the conductivity enhancing agent is an organic salt being tri-hexadecyl ammonium-trifluoro acetate, tri-hexadecyl ammonium-methyl sulfonate, tri-hexadecyl ammonium-trifluoromethyl sulfonate, or a mixture thereof; and
an ink jet device including an ink jet head consisting of one or more channels for the at least one phase change ink, and a supply path that supplies the at least one phase change ink to the one or more channels of the ink jet head from one or more reservoirs containing the at least one phase change ink, and wherein the one or more reservoirs includes a sensor to measure conductivity of the at least one phase change ink therein.

6. The ink jet system according to claim 5, wherein the ink jet device is a thermal ink jet device, an acoustic ink jet device or a piezoelectric ink jet device.

7. An ink jet system according to claim 5, wherein the ink jet device includes an intermediate transfer member, and the ink is ejected in an imagewise pattern onto the intermediate transfer member, and the ink in the imagewise pattern is subsequently transferred from the intermediate transfer member to a final recording substrate.

8. An ink jet system according to claim 5, wherein the conductivity of the phase change ink is in the range from 0.01 to 5 µS/cm measured under melt conditions at about 120°C by placing titanium electrodes in the molten ink and reading the resistivity output on a Rosemount Model 1054B LC Conductivity Meter at a frequency of 60 Hz.

9. A method of forming an image, comprising:
heating a phase change ink in a reservoir, wherein the ink comprises an ink vehicle, at least one colorant and a conductivity enhancing agent, wherein the conductivity enhancing agent is an organic salt being tri-hexadecyl ammonium-trifluoro acetate, tri-hexadecyl ammonium-methyl sulfonate, tri-hexadecyl ammonium-trifluoromethyl sulfonate, or a mixture thereof, and
jetting the heated ink onto an image receiving substrate, wherein the image receiving substrate is maintained at a second temperature at which the ink forms a gel,
wherein a reservoir has a sensor to measure the conductivity of the ink in the reservoir,
wherein the measured conductivity of the ink is compared against a value indicative of ink level in the reservoir, and
wherein addition of the ink into the reservoir is continued or stopped in response to the comparison of the measured conductivity to the value indicative of the ink level.

## Patentansprüche

1. Phasenwechseltinte mit einem Tintenträger, wenigstens einem Farbmittel und einem die Leitfähigkeit steigernden Mittel, wobei das die Leitfähigkeit steigernde Mittel ein organisches Salz ist, bei dem es sich um Trihexadecylammonium-trifluoracetat, Trihexadecylammonium-methylsulfonat, Trihexadecylammonium-trifluormethylsulfonat oder eine Mischung davon handelt.

2. Tinte nach Anspruch 1, wobei die Leitfähigkeit der Phasenwechseltinte im Bereich von 0,01 bis 5 µS/cm liegt, gemessen unter Schmelzbedingungen bei ungefähr 120 °C durch Einbringen von Titanelektroden in die geschmolzene Tinte und Ablesen der Anzeige des spezifischen Widerstands an einem Rosemount Model 1054B LC Leitfähigkeitsmessgerät bei einer Frequenz von 60 Hz.

3. Tinte nach Anspruch 1, wobei der Tintenträger bei einer Temperatur unter 40 °C ein Feststoff ist und eine Viskosität von 1 bis 20 mPa·s (Centipoise) bei einer Strahltemperatur von 50 bis 150 °C aufweist, wobei diese Viskosität unter Verwendung eines Advanced Rheometric Expansion System (ARES) Rheometers von TA Instruments, Inc., unter Verwendung einer Kegel- und Platte-Geometrie gemessen wird.

4. Tinte nach Anspruch 1, wobei der Tintenträger ausgewählt ist aus der Gruppe bestehend aus Paraffinen, mikrokristallinen Wachsen, Polyethylenwachsen, Esterwachsen, Fettsäuren und anderen wachsartigen Materialien, Fettamid enthaltenden Materialien, Sulfonamidmaterialien, harzartigen Materialien, die aus Tallölkolophonium hergestellt sind, harzartigen Materialien, die aus Harzestern hergestellt sind, Ethylen/Propylen-Copolymeren, Urethanderivaten von oxidierten synthetischen oder Petroleumwachsen, n-paraffinischen, verzweigten paraffinischen oder naphthenischen Kohlenwasserstoffen, hoch verzweigten Kohlenwasserstoffen, linearen Alkoholen mit hohem Molekulargewicht, Wachsen auf Kohlenwasserstoffbasis, modifizierten Maleinsäureanhydrid-Kohlenwasserstoffaddukten von Polyolefinen und Mischungen davon.

5. Tintenstrahlsystem, umfassend:
wenigstens eine Phasenwechseltinte mit einem Tintenträger und einem die Leitfähigkeit steigernden Mittel, wobei das die Leitfähigkeit steigernde Mittel ein organisches Salz ist, bei dem es sich um Trihexadecylammonium-trifluoracetat, Trihexadecylammonium-methylsulfonat, Trihexadecylammonium-trifluormethylsulfonat oder eine Mischung davon handelt; und
eine Tintenstrahlvorrichtung einschließlich eines Tintenstrahlkopfes, der aus einem oder mehreren Kanälen für die wenigstens eine Phasenwechseltinte besteht, und eines Zufuhrwegs, welcher die wenigstens eine Phasenwechseltinte zu dem einen oder mehreren Kanälen des Tintenstrahlkopfes aus einem oder mehreren Behältern zuführt, welche die wenigstens eine Phasenwechseltinte enthalten, und wobei der eine oder die mehreren Behälter einen Sensor zum Messen der Leitfähigkeit der wenigstens einen Phasenwechseltinte darin einschließen.

6. Tintenstrahlsystem nach Anspruch 5, wobei die Tintenstrahlvorrichtung eine thermische Tintenstrahlvorrichtung, eine akkustische Tintenstrahlvorrichtung oder eine piezoelektrische Tintenstrahlvorrichtung ist.

7. Tintenstrahlsystem nach Anspruch 5, wobei die Tintenstrahlvorrichtung ein Zwischenübertragungselement einschließt und die Tinte in einem bildweisen Muster auf das Zwischenübertragungselement ausgestoßen wird und die Tinte in dem bildweisen Muster anschließend von dem Zwischenübertragungselement auf ein Endaufzeichnungssubstrat übertragen wird.

8. Tintenstrahlsystem nach Anspruch 5, wobei die Leitfähigkeit der Phasenwechseltinte im Bereich von 0,01 bis 5 µS/cm liegt, gemessen unter Schmelzbedingungen bei ungefähr 120 °C durch Einbringen von Titanelektroden in die geschmolzene Tinte und Ablesen der Anzeige des spezifischen Widerstands an einem Rosemount Model 1054B LC Leitfähigkeitsmessgerät bei einer Frequenz von 60 Hz.

9. Verfahren zum Erzeugen eines Bildes, umfassend:
Erwärmen einer Phasenwechseltinte in einem Behälter, wobei die Tinte einen Tintenträger, wenigstens ein Farbmittel und ein die Leitfähigkeit steigerndes Mittel umfasst, wobei das die Leitfähigkeit steigernde Mittel ein organisches Salz ist, bei dem es sich um Trihexadecylammonium-trifluoracetat, Trihexadecylammonium-methylsulfonat, Trihexadecylammonium-trifluormethylsulfonat oder eine Mischung davon handelt; und
das Ausspritzen der erwärmten Tinte auf ein Bildempfangssubstrat, wobei das Bildempfangssubstrat bei einer zweiten Temperatur gehalten wird, bei welcher die Tinte ein Gel bildet,
wobei ein Behälter einen Sensor zum Messen der Leitfähigkeit der Tinte in dem Behälter aufweist, wobei die gemessene Leitfähigkeit der Tinte mit einem Wert verglichen wird, der den Tintenspiegel in dem Behälter anzeigt, und
wobei die Zugabe der Tinte in den Behälter fortgesetzt oder angehalten wird als Reaktion auf den Vergleich der gemessenen Leitfähigkeit mit dem Wert, der den Tintenspiegel anzeigt.

## Revendications

1. Encre à changement de phase ayant un véhicule d'encre, au moins une matière colorante, et un agent d'amélioration de la conductivité, dans laquelle l'agent d'amélioration de la conductivité est un sel organique étant le trifluoroacétate de tri-hexadécyle ammonium, le méthylsulfonate de tri-hexadécyle ammonium, le trifluorométhylsulfonate de tri-hexadécyle ammonium, ou un mélange de ceux-ci.

2. Encre selon la revendication 1, dans laquelle la conductivité de l'encre à changement de phase est dans la plage de 0,01 à 5 µS/cm mesurée sous des conditions de fusion à environ 120°C en plaçant des électrodes de titane dans l'encre en fusion et en lisant la sortie de résistivité sur un conductimètre Rosemount Modèle 1054B LC à une fréquence de 60 Hz.

3. Encre selon la revendication 1, dans laquelle le véhicule d'encre est un solide à une température inférieure à 40°C et a une viscosité de 1 à 20 mPa·s (centipoise) à une température d'éjection de 50 à 150°C, ladite viscosité étant mesurée en utilisant un rhéomètre Advanced Rheometric Expansion System (ARES) de TA Instruments, Inc., en utilisant une géométrie à cône et plan.

4. Encre selon la revendication 1, dans laquelle le véhicule d'encre est choisi parmi le groupe consistant en des paraffines, des cires microcristallines, des cires de polyéthylène, des cires d'ester, des acides gras et autres matières cireuses, des matières contenant des amides gras, des matières à base de sulfonamide, des matières résineuses constituées de colophanes d'huile de pin, des matières résineuses constituées de colophanes estérifiées, des copolymères d'éthylène/propylène, des dérivés uréthane de cires oxydées synthétiques ou de pétrole, des hydrocarbures n-paraffiniques, paraffiniques ramifiés ou naphténiques, des hydrocarbures hautement ramifiés, des alcools linéaires de poids moléculaire élevé, des cires à base d'hydrocarbures, des adduits hydrocarbures d'anhydride maléique modifiés de polyoléfines, et des mélanges de ceux-ci.

5. Système de jet d'encre, comprenant :
au moins une encre à changement de phase ayant un véhicule d'encre et un agent d'amélioration de la conductivité, dans lequel l'agent d'amélioration de la conductivité est un sel organique étant le trifluoroacétate de tri-hexadécyle ammonium, le méthylsulfonate de tri-hexadécyle ammonium, le trifluorométhylsulfonate de tri-hexadécyle ammonium, ou un mélange de ceux-ci ; et
un dispositif de jet d'encre incluant une tête de jet d'encre consistant en un ou plusieurs canaux pour l'au moins une encre à changement de phase, et un chemin d'amenée qui amène l'au moins une encre à changement de phase jusqu'aux un ou plusieurs canaux de la tête de jet d'encre à partir d'un ou plusieurs réservoirs contenant l'au moins une encre à changement de phase, et dans lequel l'un ou les plusieurs réservoirs incluent un capteur pour mesurer la conductivité de l'au moins une encre à changement de phase dans ceux-ci.

6. Système de jet d'encre selon la revendication 5, dans lequel le dispositif de jet d'encre est un dispositif de jet d'encre thermique, un dispositif de jet d'encre acoustique ou un dispositif de jet d'encre piézoélectrique.

7. Système de jet d'encre selon la revendication 5, dans lequel le dispositif de jet d'encre inclut un élément de transfert intermédiaire, et l'encre est éjectée selon un motif d'image sur l'élément de transfert intermédiaire, et l'encre selon le motif d'image est ensuite transférée de l'élément de transfert intermédiaire sur un substrat d'enregistrement final.

8. Système de jet d'encre selon la revendication 5, dans lequel la conductivité de l'encre à changement de phase est dans la plage de 0,01 à 5 µS/cm mesurée sous des conditions de fusion à environ 120°C en plaçant des électrodes de titane dans l'encre en fusion et en lisant la sortie de résistivité sur un conductimètre Rosemount Modèle 1054B LC à une fréquence de 60 Hz.

9. Procédé de formation d'une image, comprenant :
le chauffage d'une encre à changement de phase dans un réservoir, dans lequel l'encre comprend un véhicule d'encre, au moins une matière colorante et un agent d'amélioration de la conductivité, dans lequel l'agent d'amélioration de la conductivité est un sel organique étant le trifluoroacétate de tri-hexadécyle ammonium, le méthylsulfonate de tri-hexadécyle ammonium, le trifluorométhylsulfonate de tri-hexadécyle ammonium, ou un mélange de ceux-ci, et
l'éjection de l'encre chauffée sur un substrat de réception d'image, dans lequel le substrat de réception d'image est maintenu à une deuxième température à laquelle l'encre forme un gel,
dans lequel un réservoir a un capteur pour mesurer la conductivité de l'encre dans le réservoir,
dans lequel la conductivité mesurée de l'encre est comparée à une valeur indicatrice du niveau d'encre dans le réservoir, et
dans lequel l'addition de l'encre dans le réservoir est continuée ou stoppée en réponse à la comparaison de la conductivité mesurée à la valeur indicatrice du niveau d'encre.
